# EUROPEAN PATENT SPECIFICATION

(11) **EP 2 780 597 B1**
(45) Date of publication and mention of the grant of the patent: **27.07.2016**
(21) Application number: 12809082.6
(22) Date of filing: 14.11.2012
(51) Int. Cl.: F04B 39/02, F04B 39/12

(54) **SEALING GLOVE FOR A CYLINDER OF A COMPRESSOR, COMPRESSOR AND COOLING APPLIANCE**
HANDSCHUH ZUR ABDICHTUNG FÜR EINEN ZYLINDER EINES VERDICHTERS, VERDICHTER UND KÜHLVORRICHTUNG
GANT D'ÉTANCHÉITÉ POUR CYLINDRE DE COMPRESSEUR, COMPRESSEUR ET APPAREIL DE REFROIDISSEMENT

(30) Priority: 16.11.2011 BR PI1105470
(43) Date of publication of application: 24.09.2014
(73) Proprietor: Whirlpool S.A., 04578-000 São Paulo - SP (BR)
(72) Inventor: BRÜGGMANN MÜHLE, Henrique, Joinville-SC 89201-602 (BR); LILIE , Dietmar Erich Bernhard, Joinville-SC 89204-060 (BR)
(74) Representative: Burt, Matthew Thomas
(86) International application number: PCT/BR2012/000452
(87) International publication number: WO 2013/071386

(56) References cited:
- WO-A1-01/29444
- DE-A1-102006 052 427
- DE-A1-102007 054 334

## Description

The present invention refers to a flexible glove for sealing bearing fluid channels of an aerostatic bearing compressor, more particularly aerostatic bearing compressors applied to cooling systems.

### Description of the state of the art*

As a general rule, a cooling cycle comprises four essential elements, namely a compressor, a condenser, an expansion valve and an evaporator. In this cooling cycle, a cooling fluid (Freon®, for example) circulates through said components where the following operations occur. In the expansion valve, the cooling fluid which is found originally in liquid form, expands to enter into a gaseous and rarefied form, decreasing its own temperature. Subsequently, this fluid, now with lower density, passes through an evaporator enabling it to absorb heat from the environment. Next, the fluid comes to a compressor which compresses the fluid returning it to liquid form (or compressed gaseous form). Lastly, the fluid passes through a condenser transmitting heat to a second environment, and these stages restart when the fluid returns to the expansion valve, thus concluding the cooling cycle.

Cooling compressors may present various different forms, mechanisms and functions. Each type of compressor is better adapted to a certain type of application, and a compressor model widely known in the state of the art is the linear compressor. This compressor operates by way of the axial and oscillatory movement of a piston inside a cylinder.

The gas that enters into a linear compressor proceeds along the following path: firstly the gas penetrates into a plenum chamber, next it passes through an inlet valve and soon after fills a region called the compression chamber, that is, a region comprised by the space between the piston and the cylinder of the compressor where there occurs compression capable of transforming it into a liquid or gas having greater density. In a third moment, this fluid, now having greater density, is displaced through a discharge valve and lastly, the fluid fills a region called the discharge chamber from where it is released for the next stages of the cooling cycle.

It is noted that for correct working, linear compressors need lubrication between the outer face of the piston and the inner face of the cylinder. The purpose of said lubrication is to decrease attrition between the parts, whereby increasing the yield of the compressor and avoiding premature wear and tear of its parts. Accordingly, there are linear bearing compressors with viscous fluids, of the lubricant oil type and linear bearing compressors with gaseous fluids.

Linear bearing compressors with gaseous fluids are called aerostatic bearing linear compressors. Said compressors are endowed with a more efficient lubrication system than the lubrication system of the bearing compressors with viscous fluids due to the lower viscous attribution coefficient of the gaseous fluid in relation to the viscous fluid (oil). Another advantage of the linear aerostatic compressor refers to the absence of an oil pump to distribute the viscous fluid inside the compressor, a fact that decreases the manufacturing cost and complexity of this product.

An important characteristic of aerostatic bearing linear compressors, hereinafter referred to as aerostatic compressors, refers to the fact that they can have bearing formation through the gas from the cooling fluid itself. As they have bearing by the very cooling fluid that circulates through the compressor, this equipment saves on an extra source of lubricant, since all the lubricating fluid necessary for using these compressors is already abundantly available inside them.

The aerostatic bearing compressor with cooling fluid is endowed with bearing channels, located on the outer face of the cylinder. These channels are capable of distributing the gaseous fluid to distribution orifices which are spread along the cylinder. The distribution orifices cross through the structure of the cylinder, meeting up with the piston region, transporting gaseous fluid homogenously to the gap existing between the cylinder and the piston.

So that the gaseous fluid is uniformly distributed in the gap between the piston and the cylinder, it is necessary to seal the bearing channels, preventing communication between them and the pressurized fluid outlet which will work in the bearing formation of the piston.

Usually, the part that fulfills the function of sealing the bearing channels is a metal jacket having tubular geometry, referred to hereinafter as sealing jacket.

It is noted that between the inner surface of the sealing jacket and the outer surface of the cylinder there may be gaps which besides allowing undesirable communication between the bearing channels, may increase the sectional area of certain restriction channels, whereby causing a greater flow of fluid in these channels and, consequently, lead to poor fluid distribution in the gap between piston and cylinder, resulting in irregular bearing formation.

For effective sealing of the restriction channels, it is necessary to carry out interference coupling between the sealing jacket and the cylinder, usually made of metal material. Besides this operation, it is also necessary to carry out fine surface finishing with a view to obtaining a surface endowed with low roughness both on the outer face of the cylinder and on the inner face of the jacket.

However, a fine surface finishing requires a size tolerance that adds cost and increases the manufacturing time of these parts due to the frequent need of turning and grinding processes on both the parts.

Moreover, there is the drawback that interference coupling between the sealing jacket and the cylinder may deform the cylinder whereby characterizing another drawback to the arrangement of jackets in aerostatic compressors of the state of the art.

A sealing jacket of aerostatic compressors of the state of the art, such as the one mentioned, is made of metal material, that is, a material having low flexibility, which requires a thorough surface finishing so that it is capable of sealing the bearing channels of the compressor.

Nevertheless, even if a thorough job is performed in the manufacture of the sealing jacket and cylinder of the compressor, there is still the possibility that flaws may arise in the end product due to poor distribution of fluid between the piston and the cylinder, which may decrease the yield of the compressor and/or damage its internal parts, whereby decreasing its useful life. This occurs because the metal constitution of the sealing jacket and of the cylinder of the compressor prevent a perfect sealing of the restriction channels, even if various machining and grinding operations are carried out on these parts with a view to achieving greater precision in the surface finishing of these components.

Prior art DE 10 2006 052427 shows a typical compressor.

Therefore, there is still no sealing jacket of an aerostatic linear compressor that decreases the complexity and cost of the manufacturing process of this equipment, efficiently guaranteeing the sealing of the bearing channels and that prevents the occurrence of flaws arising from the interference coupling process between the parts of the compressor.

### Objectives of the invention

The objective of the present invention is to provide a sealing system of bearing channels of aerostatic linear compressors that is simple, efficient and capable of reducing production costs of aerostatic linear compressors.

Another objective of the present invention is to provide a sealing glove of restriction channels of aerostatic linear compressors, the flexibility of which allows the sealing of restriction channels in aerostatic compressors, whereby preventing gas from escaping between the restriction channels.

A further objective of the present invention is to provide a cooling system or appliance, endowed with said sealing glove.

### Brief description of the invention

The invention is defined by the appended claims.

The objectives of the present invention are achieved by a sealing glove for a cylinder of a linear compressor de aerostatic bearing, the cylinder being defined by an outer surface and an inner surface, the inner surface defining a through cavity inside the cylinder, capable of enabling linear movement of a piston on its inside, wherein the inner surface of the cylinder comprises a plurality of distribution orifices which communicate with the outer surface, the outer surface comprising bearing channels capable of communicating with said distribution orifices, the glove being flexible and disposed on the outer surface of the cylinder under radial tension, the association between the outer surface and the sealing glove defining bearing formation ducts capable of directing the bearing fluid to the distribution orifices.

The objectives of the present invention are also achieved by an aerostatic bearing linear compressor comprising a cylinder defined by an outer surface and an inner surface, the inner surface defining a through cavity inside the cylinder capable of enabling a linear movement of a piston in its inside, wherein the inner surface of the cylinder comprises a plurality of distribution orifices which communicate with the outer surface, the outer surface comprising bearing channels which communicate with said distribution orifices, and a sealing glove is disposed on the outer surface of the cylinder under radial tension, the association between the outer surface and the sealing glove defining restriction ducts capable of directing the bearing fluid to the distribution orifices at appropriate pressure and in the adequate quantity.

Lastly, an objective of the present invention is to provide a cooling appliance which comprises a sealing glove as defined above.

### Summary description of the drawings

The present invention shall now be described in greater detail based on an example of an embodiment represented in the drawings. The drawings show:
Figure 1 - is a longitudinal cut view of an aerostatic linear compressor of the present invention endowed with the flexible sealing glove of the present invention;
Figure 2 - is a cross-sectional view of a flexible sealing glove of the present invention positioned on a cylinder of an aerostatic linear compressor;
Figure 3 - is a perspective view of a cylinder of an aerostatic linear compressor of the present invention;
Figure 4 - is a perspective view of a cylinder of an aerostatic linear compressor endowed with a flexible sealing glove of the present invention;
Figure 5 - is a cross-sectional view of the BB section of an aerostatic compressor linear endowed with a glove of the present invention;
Figure 6 - is a cross-sectional view of a flexible sealing glove of the present invention;
Figure 7 - is a cross-sectional view of a flexible sealing glove of the present invention showing one of the potential effects of internal pressure on the bearing channels;
Figure 8 - is a cross-sectional view of a flexible sealing glove of the present invention showing one of the potential effects of internal pressure on the bearing channels in light of the external pressure to the flexible glove;
Figure 9 - is a longitudinal cut view of an aerostatic linear compressor illustrating its working during the suction stage;
Figure 10 - is a longitudinal cut view of an aerostatic linear compressor illustrating its working during the compression stage;
Figure 11 - is a longitudinal cut view of an aerostatic linear compressor illustrating its working during the exhaust stage;
Figure 12 - is a longitudinal cut view of part of the compressor of the present invention in an alternative arrangement illustrating an interface region;
Figure 13 - is a perspective view of a first alternative arrangement of the cylinder of the compressor of the present invention;
Figure 14 - is a perspective view of a second alternative arrangement of the cylinder of the compressor of the present invention; and
Figure 15 - is a perspective view of a third alternative arrangement of the cylinder of the compressor of the present invention.

### Detailed description of the drawings

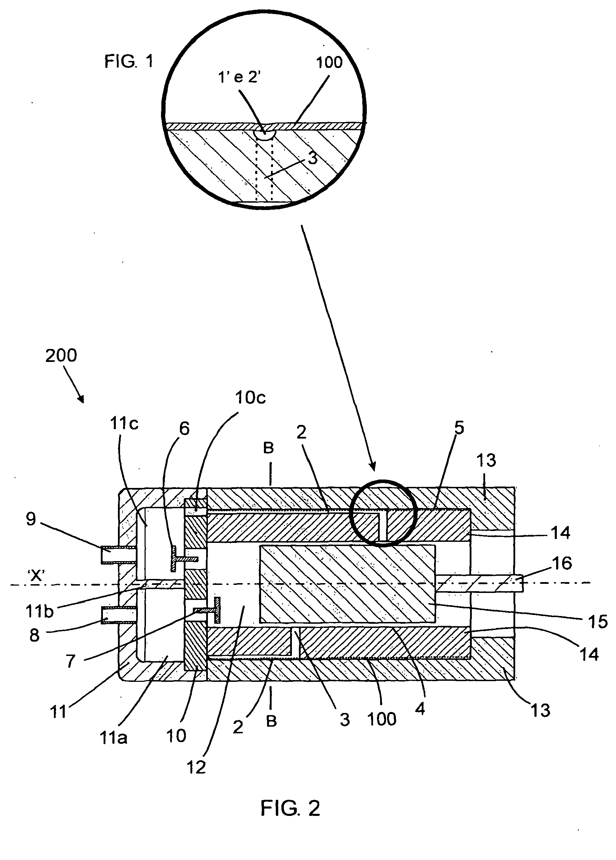

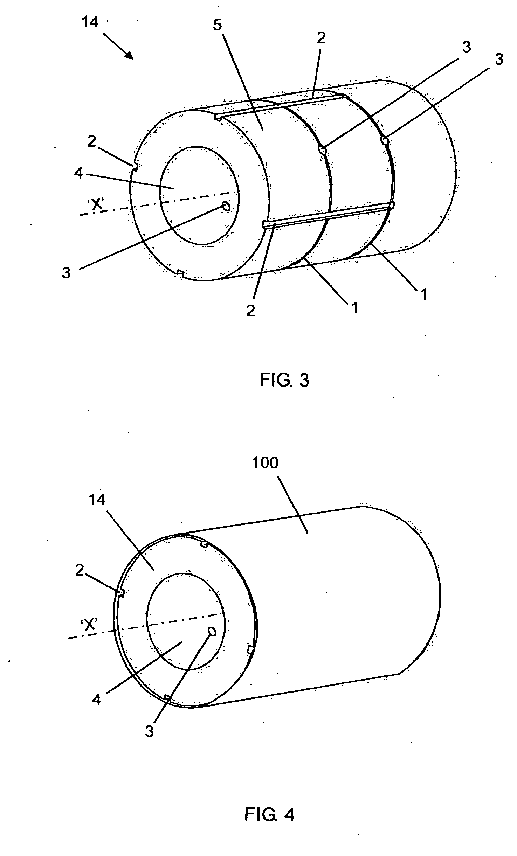

The main elements that make up an aerostatic linear compressor 200 capable of receiving the sealing glove 100 of the present invention, as can be noted in figure 1, are comprised by a piston 15, having the function of carrying out an oscillatory movement inside a cylinder 14; a cylinder 14 (see figure 3) endowed with distribution orifices 3, connected to bearing channels 1,2, (located on the outer face 5 of said cylinder 14); an outer block 13, capable of sealing the entire radial area of the compressor 200; a sealing lid 11, capable of sealing the forward face of the compressor 200; a head 10 whose function is to separate the compression chamber 12 (comprising the space between piston 15 and cylinder 14) from the region prior to the sealing lid 11, which, in turn, is comprised by the exhaust 11c and inlet 11a chambers (separated by a division 11b); and a movement rod 16, capable of transferring an oscillatory, linear movement from an external source (not illustrated in the drawings) of the piston 15.

So that the piston 15, of the aerostatic compressor 200 of the present invention has bearing in the contact region between cylinder 14 and piston 15, it is necessary that under the inner surface 4 of the cylinder 14 there be a layer of fluid preferably gaseous that reduces the attrition between these parts, decreasing the abrasion between them and increasing the yield of the compressor 200. Notably, the present invention has application in aerostatic compressors 200 which use the cooling fluid itself to perform the bearing function.

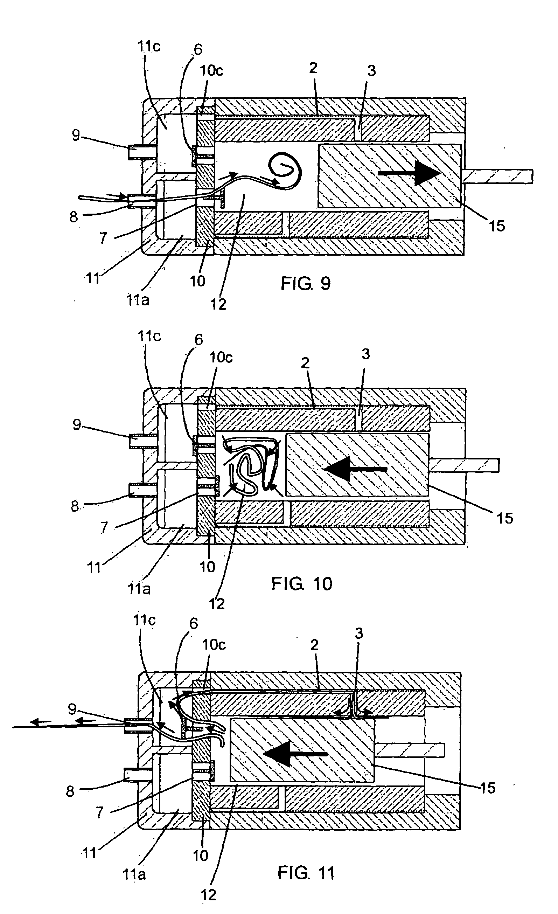

The provision of this fluid layer, capable of bearing the piston 15 inside the cylinder 14 of an aerostatic compressor 200 can be better understood by way of figures 9, 10 and 11, which illustrate the main stages of working of the compressor 200:
i - Figure 9 illustrates the suction (or inlet) stage, where the cooling fluid penetrates through the inlet tube 8, then fills the plenum chamber 11a and finally occupies the compression chamber 12. This occurs when the piston 15 moves in an opposite direction to the sealing lid 11 and the inlet valve 7 is opened.
ii - Figure 10 illustrates the compression stage, which occurs when the inlet valve 7 closes and the cooling fluid is compressed inside the compression chamber 12, through a linear movement of the cylinder towards the sealing lid 11.
iii - Figure 11 illustrates the exhaust stage where the piston continues compressing the cooling fluid inside the compression chamber 12 until its pressure exceeds the pressure needed to open the exhaust valve 6 and this fluid may be released to the exhaust chamber 11 c. From the exhaust chamber 11c the fluid divides into two portions which follow two different paths.

The major part of the fluid which enters the exhaust chamber 11c, returns to the cooling cycle of the cooling system where the compressor 200 is inserted, through the exhaust tube 9; a second portion of fluid, the portion which filled the exhaust chamber 11c and did not return to the cooling cycle, follows a third cycle (a cycle present only in aerostatic linear compressors 200 that use the very cooling fluid to carry out the function of bearing formation of the piston 15).

This second portion of fluid penetrates into a passage 10c, located on a header 10 and then follows bearing channels 1,2, which direct this fluid to distribution orifices 3 which, in turn, have the function of providing a chamber of gaseous fluid between the inner surface 4 of the cylinder 14 and the outer surface of the piston 15.

As described, the compressor 200 of the present invention is endowed with bearing channels 1,2, located on the outer surface 5 of the cylinder 14, whose function is to distribute (and restrict) fluid to distribution orifices 3, which, in turn, pass on this fluid to the gap existing between piston 15 and cylinder 14.

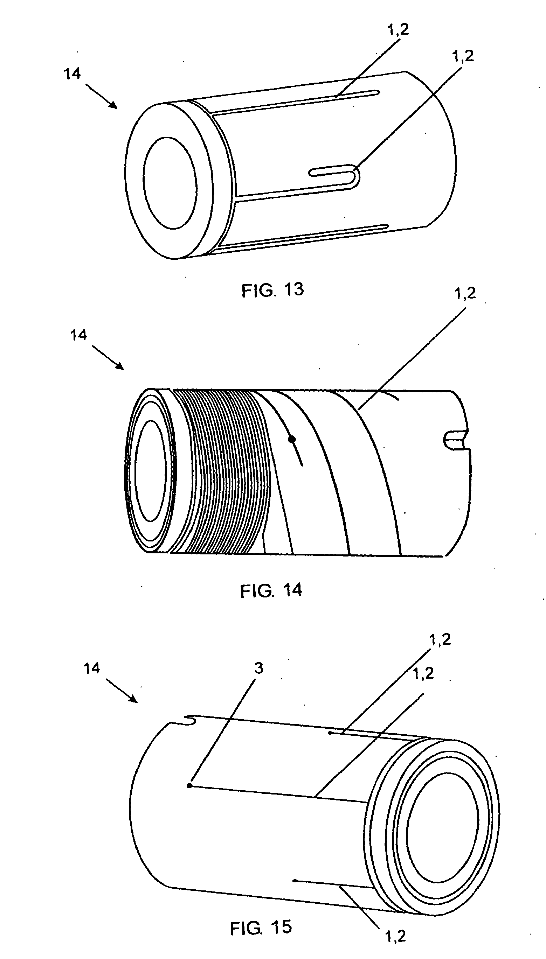

The bearing channels 1,2, may present various forms and different arrangements, and may track different paths on the outer surface 5 of the cylinder 14, such as, for example, along radial, longitudinal, helical, diagonal paths, a combination between these or any other capable of adequately performing the function (see figures 13,14,15). The sectional areas of these bearing channels 1,2 may also present various different forms such as, a triangular, quadrangular, rounded geometry, among others. The bearing channels 1,2 can also be divided into feeder channels 2 and restriction channels 1, such as illustrated in a preferred arrangement in figure 3.

The feeder channels 2 are commonly disposed in longitudinal profiles along the cylinder 14 (see figure 3) and usually present a sectional area having greater amplitude than the sectional area of the restriction channels 1. Said characteristic is due to the fact that the function of the feeder channels 2 is just to distribute fluid to the restriction channels 1. The restriction channels 1 also comprise the function of regulating the pressure of the fluid before it is displaced to the gap between piston 15 and cylinder 14. The restriction channels 1, in turn, are distributed in a radial arrangement along the outer face of the cylinder 14, and usually have the capacity to communicate directly with distribution orifices 3 that release bearing fluid to the gap between piston 15 and cylinder 14.

So that these bearing channels 1,2 effectively fulfill the function of distributing bearing fluid in a uniform manner to the distribution orifices 3, it is necessary that these channels 1,2 are sealed by some type of outer surface of the cylinder 14 that is capable of preventing the flow of fluid of a certain channel 1,2 from leaking to a neighboring channel 1,2.

This sealing surface, when overlapping the channels bearing formation 1,2, define bearing formation ducts 1',2'. The bearing formation ducts 1',2', by presenting a closed structure (differently to the bearing channels 1,2), are effectively capable of providing fluid to the distribution orifices 3 without this fluid leaking from one channel 1,2 to the other channel 1,2.

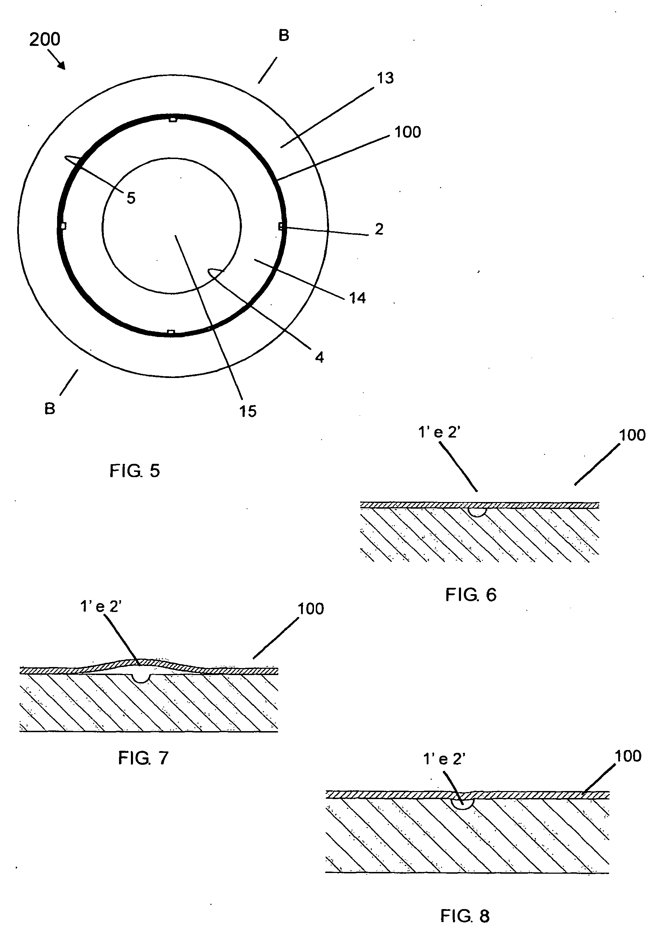

Therefore, the present invention is focused on sealing these bearing channels 1,2 through the disposition of a flexible sealing glove 100 on the outer face 5 of the cylinder 4, such that the sealing glove 100 maintains the cylinder 14 under radial compression. Put otherwise, the sealing glove 100 of the present invention can be defined as a substantially tubular object, having a flexible/elastic constitution capable of providing the sealing of the bearing channels 1,2 through a radial tension which maintains its structure in contact with the outer surface 5 of the cylinder 14 (see figures 4 and 5).

The sealing glove 100 of the present invention is made of a substantially polymeric material, that is, a material that may comprise composites, polymers, elastomers and any other materials endowed with organic substances, which have average or high flexibility and which have an elasticity limit capable of enabling this sealing glove 100 to be fastened to the cylinder 14, under radial tension, preventing the presence of gaps between the glove 100 and the cylinder 14. Furthermore, it has to be noted that for this radial tension to occur, it is also necessary for the inner diameter of the glove 100, when it is not tensioned, to be slightly less than the outer diameter of the cylinder 14, whereby enabling a tensioning of the glove 100 material on the outer surface of the cylinder 14.

In another preferred arrangement, it is possible for the inner diameter of the sealing glove 100 to present, before being applied to the cylinder 14, an inner diameter that is greater than the outer diameter of the cylinder 14. In these cases, the glove 100 may be made of a thermo-contractile material, that is, a material which, once heated, contracts so as to permit installation with a tight adjustment of the sealing glove 100 on the cylinder 14.

As described, the glove 100 has benefits such as better sealing of the bearing channels 1,2 due to a radial tensioning of its structure around the cylinder 14, being capable of eliminating the gaps existing between the glove 100 and the outer surface 5 of the cylinder 14, whereby improving the process of bearing formation of the piston 15 inside the compressor 200.

However, the flexibility of the glove 100 may potentially cause a drawback to the working of the compressor 200. Said flexibility allows the glove 100 to bend oppositely to its axial center 'X' in the regions comprised over the bearing channels 1,2, (as can be noted in figure 7) due to the fact that the pressure existing on the bearing formation ducts 1',2' is greater than the pressure on the outer side of the glove.

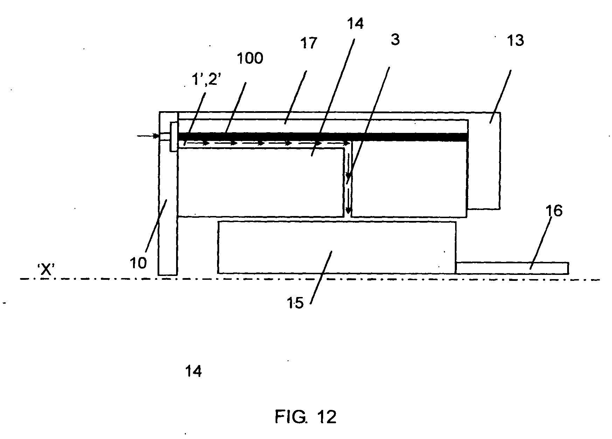

Yet this potential problem is solved by applying a positive pressure to the interface region 17 defined between the outer face of the sealing glove 100 and the inner face of the outer block 13. Said positive pressure, when operating on the outer face of the glove 100, neutralizes the force exerted by the positive pressure acting under the inner face of the glove 100 (see figure 6). This extra source of positive pressure is exerted by the cooling fluid existing on the exhaust chamber 11c which may act not only on the inner face of the glove 100 (running through the bearing formation ducts 1',2') but also on the outer face of the glove 100, exerting a counter pressure to the pressure existing on the bearing formation ducts 1',2', whereby guaranteeing a constant flow in the bearing formation ducts 1',2' (see figure 12).

In short, when its outer face is exposed to a pressure equal to the discharge pressure of the compressor 200, the flexible sealing glove 100 becomes capable of sealing the bearing channels 1,2, with greater effectiveness so as to avoid the leakage of fluid between said bearing channels 1,2.

However, even using a flexible sealing glove 100 and a positive pressure acting on its outer face, a third problem may still occur in the compressor 200. If the pressure acting on the outer face of the glove 100 is slightly greater than the pressure acting inside the bearing formation ducts 1' and 2', the sealing glove 100 may bend slightly towards the central reference axis 'X' (see figure 8). Nevertheless, this problem can be solved by an oversizing in the section of the bearing channels 1 and 2 or even by altering the composition and/or diameter of the sealing glove 100.

It is obvious that the linear aerostatic compressor 200 as well as the flexible sealing glove 100 of the present invention may comprise various constructive alternatives, related to different forms, materials and dispositions, provided that all these alternatives comprise the conceptual part of this invention, as disclosed in this specification.

Below are some alternative embodiment possibilities of the present invention:
i. The flexible sealing glove 100 of the present invention may be made of: rubber, polyethylene, PVC among other polymers or composites, provided that they are capable of, at least, providing flexibility to its structure. The surface finishing of this 100, may be smooth or rough or even a composition in which different parts of the glove 100 present different surface finishings. Regarding its physical shape, the glove 100 of the present invention may present sealing rings at its longitudinal ends capable of retaining the glove 100 fastened in an axial positioning on the cylinder 14, as well as holes corresponding to protrusions in the cylinder 14 also endowed with the function of retaining the glove 100 in a fastened positioning inside the compressor 200. Further in regard to its composition material, the glove 100 may present a mixture of elements in its structure, such as, for example, the combination of a polymer and a nylon mesh that guarantees greater resistance to its structure (such as used in tires) or the incorporation of metal rings in its structure that prevent radial flexing oppositely to the axial center 'X' of the compressor 200. In terms of its function, the glove 100 may be capable of flexing inwardly of the bearing channels 1,2 bending slightly under an external pressure, or may be endowed with an elasticity coefficient such that it is capable of resisting an internal pressure of the bearing formation ducts 1',2' keeping the sectional area of the bearing formation ducts 1',2' constant.
ii. The fluid capable of pressurizing the outer face of the glove 100 against the cylinder 14 may be provided through channels or orifices located on the inner face of the outer block 13 or may be freely distributed on the interface 17 between glove 100 and outer block 13.
iii. The cylinder 14, besides being able to comprise bearing channels 1,2 in different arrangements on its outer face, such as previously described, may also be comprised of different materials, such as metal polymers and composites, porous or not, provided they allow suitable running of the compressor 200.

Note that the alternative arrangements disclosed above are merely illustrative alternatives of countless possibilities that the present invention may comprise. It is also noted that the alternative arrangements both of the flexible sealing glove 100 and the compressor 200 of the present invention are not exhausted in this specification, and may comprise innumerous alterations, provided that they all comprise the conceptual part of the present invention.

Lastly, regarding the benefits achieved by the present invention, it can be said that the new arrangement of this glove 100 has benefits both in terms of the manufacturing process of the compressor 200, and in the utilization itself. In relation to the manufacturing process of the compressor 200, this polymeric sealing glove 100 dispenses with the need to perform rigorous processes on the surface finishing of the inner face of the glove 100, and on the surface finishing of the outer face of the cylinder 14. The elimination of such processes reduces costs, time and the complexity of production.

As for utilization of the compressor 200, it can be seen that this new technology increases its efficiency and its yield. Said attributions originate from the reduction of gaps between the sealing glove 100 and the cylinder 14 that are so common in the state of the art; the decreased risk of operating failures in the compressor 200 (since the compressor 200 that uses this new technique has a lower risk of presenting malfunctions because it does not have cracks and internal deformations arising from interference coupling between the glove 100 and the cylinder 14); and, lastly, owing to improved distribution of bearing fluid in the gap between piston 15 and cylinder 14 thanks to the elimination of leakage between the bearing formation ducts 1',2' of the compressor 200 along its extensions.

Lastly, it is noted that a compressor 200 containing the glove 100 as described may, among the most diverse applications, be used in the cooling industry.

Having described an example of a preferred embodiment, it should be understood that the scope of the present invention encompasses other possible variations, being limited only by the content of the accompanying claims, potential equivalents being included therein.

## Claims

1. An aerostatic bearing linear compressor (200) comprising a cylinder (14) defined by an outer surface (5) and an inner surface (4), the inner surface (4) defining a through cavity inside the cylinder (14) capable of enabling the linear movement of a piston (15) on its inside, and the inner surface (4) of the cylinder (14) comprises a plurality of distribution orifices (3) which communicate with the outer surface (5), the outer surface (5) comprising bearing channels (1,2) that communicate with said distribution orifices (3), a sealing glove (100) is disposed on the outer surface (5) of the cylinder (14) under radial tension, the association between the outer surface (5) and the sealing glove (100) defining bearing formation ducts (1',2') capable of directing the bearing fluid to the distribution orifices (3), the linear compressor (200) being **characterized by** the fact that the outer surface of the sealing glove (100) being pressurized.

2. A compressor (200) as claimed in claim 1, **characterized by** the fact that the bearing fluid flows over the inner surface of the sealing glove (100) through the bearing channels (1',2') and acts on the interface (17) defined between the outer surface of the glove (100) and the outer block (13), constantly pressurizing the outer surface and the inner surface of the sealing glove (100).

3. A compressor (200) as claimed in claims 1 and 2, **characterized by** the fact that the pressure of the bearing fluid that acts on the outer surface of the sealing glove (100) is substantially equal to the discharge pressure of the compressor (200).

4. A compressor (200) as claimed in claims 1 to 3, **characterized by** the fact that the pressure exerted on the outer surface of the sealing glove (100) comprises a value equal to or greater than that of the pressure which acts on the inner surface of the sealing glove (100).

5. A compressor (200) as claimed in claims 1 to 4, **characterized by** the fact that the bearing fluid is the cooling fluid.

6. A compressor (200) as claimed in claims 1 to 5, **characterized by** the fact that the sealing glove (100) is made of polymeric material.

7. A compressor (200) as claimed in claims 1 to 6, **characterized by** the fact that the sealing glove (100) is endowed with elastomeric properties.

8. A compressor (200) as claimed in claims 1 to 7, **characterized by** the fact that the sealing glove (100) is made of thermo-contractile material.

9. A compressor (200), as claimed in claims 1 to 8, **characterized by** the fact that the bearing formation ducts (1',2') comprise feeder channels (2) and restriction channels (1).

10. A compressor (200), as claimed in claims 1 to 9, **characterized by** the fact that the restriction channels (1) are disposed radially in relation to the axial center ('X') of the compressor (200).

11. A compressor (200), as claimed in claims 1 to 10, **characterized by** the fact that the feeder channels (2) are disposed in parallel to the axial center ('X') of the compressor (200).

12. A cooling appliance, **characterized by** the fact that it comprises a compressor (200) as defined in claims 1 to 11.

## Patentansprüche

1. Aerostatisch gelagerter Linearkompressor (200) umfassend einen Zylinder (14), der über eine äußere Oberfläche (5) und eine innere Oberfläche (4) definiert ist, wobei die innere Oberfläche (4) einen durchlaufenden Innenraum innerhalb des Zylinders (14) definiert, der geeignet ist, eine Linearbewegung eines Kolbens (15) an seiner Innenseite zu ermöglichen und wobei die innere Oberfläche (4) des Zylinders (14) eine Vielzahl von Verteilöffnungen (3) umfasst, die in Verbindung zu der äußeren Oberfläche (5) stehen und die äußere Oberfläche (5) Lagerungskanäle (1, 2) umfasst, die in Verbindung mit den genannten Verteilöffnungen (3) stehen, ein Dichtüberzug (100) unter einer radialen Spannung an der äußeren Oberfläche (5) des Zylinders (14) angeordnet ist, und die Verbindung von der äußeren Oberfläche (5) und dem Dichtüberzug (100) Lagerbildungskanäle (1', 2') definieren, die geeignet sind, das Lagerfluid zu den Verteilöffnungen (3) zu leiten
und der Linearkompressor (200) **dadurch gekennzeichnet ist, dass** auf die äußere Oberfläche des Dichtüberzugs (100) ein Druck ausgeübt wird.

2. Kompressor (200) gemäß Anspruch 1, **dadurch gekennzeichnet, dass** das Lagerfluid über die bzw. entlang der inneren Oberfläche des Dichtüberzugs (100) und durch die Lagerungskanäle (1', 2') fließt und durch eine dauerhafte Druckausübung auf die äußere Oberfläche und die innere Oberfläche des Dichtüberzugs (100) einen Einfluss auf das Interface (17) ausübt, das zwischen der äußeren Oberfläche des Dichtüberzugs (100) und dem äußeren Gehäuse (13) definiert ist.

3. Kompressor (200) gemäß einem der Ansprüche 1 und 2, **dadurch gekennzeichnet, dass** der Druck des Lagerfluids, der auf die äußere Oberfläche des Dichtüberzugs (100) ausgeübt wird, im Wesentlichen dem Auslassdruck des Kompressors (200) gleicht.

4. Kompressor (200) gemäß einem der Ansprüche 1 bis 3, **dadurch gekennzeichnet, dass** der Druck, der auf die äußere Oberfläche des Dichtüberzugs (100) ausgeübt wird, einen Wert aufweist, der gleich oder größer ist als der des Drucks, der auf die innere Oberfläche des Dichtüberzugs (100) wirkt.

5. Kompressor (200) gemäß einem der Ansprüche 1 bis 4, **dadurch gekennzeichnet, dass** das Lagerfluid ein Kühlfluid ist.

6. Kompressor (200) gemäß einem der Ansprüche 1 bis 5, **dadurch gekennzeichnet, dass** der Dichtüberzug (100) aus einem polymeren Material hergestellt ist.

7. Kompressor (200) gemäß einem der Ansprüche 1 bis 6, **dadurch gekennzeichnet, dass** der Dichtüberzug (100) mit elastomerischen Eigenschaften ausgestattet ist.

8. Kompressor (200) gemäß einem der Ansprüche 1 bis 7, **dadurch gekennzeichnet, dass** der Dichtüberzug (100) aus einem thermo-kontraktiven Material hergestellt ist.

9. Kompressor (200) gemäß einem der Ansprüche 1 bis 8, **dadurch gekennzeichnet, dass** die Lagerbildungskanäle (1', 2') Zuflusskanäle (2) und Begrenzungskanäle (1) umfassen.

10. Kompressor (200) gemäß einem der Ansprüche 1 bis 9, **dadurch gekennzeichnet, dass** die Begrenzungskanäle (1) in Bezug auf die Mittelachse (X) des Kompressors (200) radial angeordnet sind.

11. Kompressor (200) gemäß einem der Ansprüche 1 bis 10, **dadurch gekennzeichnet, dass** die Zuflusskanäle (2) in Bezug auf die Mittelachse (X) des Kompressors (200) parallel angeordnet sind.

12. Kühlvorrichtung, **dadurch gekennzeichnet, dass** sie einen Kompressor (200) nach einem der Ansprüche 1 bis 11 aufweist.

## Revendications

1. Compresseur (200) linéaire de palier aérostatique comprenant un cylindre (14) défini par une surface extérieure (5) et une surface intérieure (4), la surface intérieure (4) définissant une cavité traversante à l'intérieur du cylindre (14) apte à permettre le déplacement linéaire d'un piston (15) à l'intérieur, et la surface intérieure (4) du cylindre (14) comprend une pluralité d'orifices de distribution (3) qui communiquent avec la surface extérieure (5), la surface extérieure (5) comprenant des canaux de palier (1, 2) qui communiquent avec lesdits orifices de distribution (3), un gant d'étanchéité (100) est disposé sur la surface extérieure (5) du cylindre (14) sous tension radiale, l'association entre la surface extérieure (5) et le gant d'étanchéité (100) définissant des canaux de formation de palier (1', 2') aptes à diriger le fluide de palier aux orifices de distribution (3), le compresseur linéaire (200) étant **caractérisé par le fait que** la surface extérieure du gant d'étanchéité (100) est pressurisée.

2. Compresseur (200) tel que revendiqué dans la revendication 1, **caractérisé par le fait que** le fluide de palier coule le long de la surface intérieure du gant d'étanchéité (100) à travers les canaux de palier (1', 2') et agit sur l'interface (17) défini entre la surface extérieure du gant (100) et le bloc externe (13), mise sous pression constante de la surface extérieure et la surface intérieure du gant d'étanchéité (100).

3. Compresseur (200) tel que revendiqué dans les revendications 1 et 2, **caractérisé par le fait que** la pression du fluide de palier qui agit sur la surface extérieure du gant d'étanchéité (100) est sensiblement égale à la pression de refoulement du compresseur (200).

4. Compresseur (200) tel que revendiqué dans les revendications 1 à 3, **caractérisé par le fait que** la pression exercée sur la surface extérieure du gant d'étanchéité (100) comprend une valeur égale ou supérieure à celle de la pression qui agit sur la surface intérieure du gant d'étanchéité (100).

5. Compresseur (200) tel que revendiqué dans les revendications 1 à 4, **caractérisé par le fait que** le fluide de palier est le fluide de refroidissement.

6. Compresseur (200) tel que revendiqué dans les revendications 1 à 5, **caractérisé par le fait que** le gant d'étanchéité (100) est réalisé en matériau polymère.

7. Compresseur (200) tel que revendiqué dans les revendications 1 à 6, **caractérisé par le fait que** le gant d'étanchéité (100) est doté de propriétés élastomères.

8. Compresseur (200) tel que revendiqué dans les revendications 1 à 7, **caractérisé par le fait que** le gant d'étanchéité (100) est constitué d'un matériau thermo-contractile.

9. Compresseur (200), tel que revendiqué dans les revendications 1 à 8, **caractérisé par le fait que** les canaux de formation de palier (1', 2') comprennent des canaux d'alimentation (2) et des canaux de restriction (1).

10. Compresseur (200), tel que revendiqué dans les revendications 1 à 9, **caractérisé par le fait que** les canaux de restriction (1) sont disposés radialement par rapport à l'axe central (X) du compresseur (200).

11. Compresseur (200), tel que revendiqué dans les revendications 1 à 10, **caractérisé par le fait que** les canaux d'alimentation (2) sont disposés parallèlement à l'axe central (X) du compresseur (200).

12. Appareil de refroidissement, **caractérisé par le fait qu'**il comprend un compresseur (200) tel que défini dans les revendications 1 à 11.
